(19) Europäisches Patentamt
European Patent Office
Office européen des brevets

(11) Numéro de publication : **0 018 899**
**B1**

# (12) FASCICULE DE BREVET EUROPÉEN

(45) Date de publication du fascicule du brevet : **05.01.83**

(51) Int. Cl.³ : **C 07 F 7/22**, C 07 C154/02// C08K5/57

(21) Numéro de dépôt : **80400564.3**

(22) Date de dépôt : **25.04.80**

(54) **Nouveau procédé de préparation d'organoétains.**

(30) Priorité : **04.05.79 FR 7911283**

(43) Date de publication de la demande : **12.11.80 Bulletin 80/23**

(45) Mention de la délivrance du brevet : **05.01.83 Bulletin 83/01**

(84) Etats contractants désignés : **BE CH DE GB IT LI NL**

(56) Documents cités :
**FR A 1 388 303**
**FR A 1 513 145**
**FR A 1 584 902**
**GB A 737 392**
**US A 2 786 813**
**S. PATAI « THE CHEMISTRY OF THE THIOL GROUP » Part 1, 1974, John Wiley & Sons New York US pages 198, 199**

(73) Titulaire : **SOCIETE NATIONALE ELF AQUITAINE**
**Tour Aquitaine**
**F-92400 Courbevoie (FR)**

(72) Inventeur : **Foure, Michel**
**Route Nationale 117**
**F-64170 Artix (FR)**
Inventeur : **Le Moal, Jean-Yves**
**8, Allée des Pins**
**F-64150 Mourenx (FR)**

(74) Mandataire : **Kohn, Armand**
**5, Avenue Foch**
**F-92380 Garches (FR)**

**EP 0 018 899 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

# Nouveau procédé de préparation d'organoétains

L'invention concerne la préparation de composés organiques de l'étain, et plus particulièrement de dérivés renfermant du soufre dans leur molécule ; elle se rapporte, entre autres, à l'obtention de composés mercapto-stanniques.

Des composés organiques de l'étain ont actuellement des applications industrielles importantes, et sont produits en d'assez forts tonnages : on sait notamment que des composés organostanniques sont couramment utilisés comme stabilisants de résines halogéno-vinyliques, comme biocides et en tant que catalyseurs dans la préparation de mousses de polyuréthanne. Il existe donc un besoin de procédés permettant d'obtenir les composés organiques de l'étain économiquement et à l'état de pureté convenable ; cela concerne tout particulièrement les organostanniques renfermant le groupe mercapto, qui se sont avérés tout spécialement utiles pour la stabilisation de résines halogéno-vinyliques. Or, les méthodes classiques d'obtention de mercaptostanniques procèdent toutes par l'action d'un thiol sur un composé stannique, comme on peut le voir notamment dans les brevets FR 1 584 902 ou 1 513 145. Par exemple, pour faire un dialkyl-di-mercaptoétain, on applique la réaction

$$R_2S_nCl_2 + 2R'SH \longrightarrow R_2Sn(SR')_2 + 2HCl$$

qui montre la nécessité de consommer du mercaptan R'SH et également une base pour la neutralisation de l'HCl formé. Le coût du produit final est relativement élevé, en partie à cause du prix élevé des composés R'SH quels qu'ils soient : mercaptans alkyliques ou aryliques, mercapto-acides, mercapto-esters, esters de mercaptoalcools, etc.

La présente invention apporte un progrès technique marqué sur cet art antérieur : elle rend possible la synthèse de composés organostanniques renfermant du soufre, sans l'utilisation de mercaptan et sans la nécessité d'une neutralisation subséquente. L'invention permet donc de fabriquer une vaste gamme de produits désirés, plus commodément et avec des prix de revient inférieurs.

L'invention résulte de la découverte d'une nouvelle réaction, inattendue, qui permet de fixer un ou plusieurs groupes contenant du soufre sur l'atome de l'étain, par l'action d'un thioxanthate sur un sel d'étain.

Jusqu'à présent, lorsqu'on a fait réagir un thioxanthate avec un halogénure d'étain, la réaction avait lieu en milieu anhydre, dans le but de produire du thioxanthate d'étain. De telles opérations sont décrites dans les brevets GB 737 392 et US 2 786 813.

Par contre, le nouveau procédé suivant l'invention consiste à faire réagir un sel d'étain avec un thioxanthate d'un métal ou d'ammonium, dans un solvant, en présence d'eau, ce qui conduit non plus au thioxanthate de Sn mais à un mercapto-dérivé de l'étain.

Le métal du thioxanthate est de préférence un alcalin, notamment sodium ou potassium.

L'atome de métal, ou le $NH_4$, étant désigné par M, et le radical organique du thioxanthate par R', la réaction suivant l'invention peut s'écrire de la façon suivante, dans le cas d'un sel stannique d'anion X, portant éventuellement un groupe organique R :

$$(4-n)M\text{—}S\overset{\overset{S}{\|}}{C}S\text{—}R' + R_nSnX_{(4-n)} \longrightarrow R_nSn(SR')_{(4-n)} + (4-n)MX + (4-n)CS_2 \quad (1)$$

où n peut être un nombre entier de 1 à 3 ou 0.

Lorsque le sel d'étain utilisé ne comporte pas de radical organique R, c'est-à-dire si n = 0, la réaction conduit à un composé porteur de 4 groupes organiques R', à savoir $Sn(SR')_4$, suivant le schéma :

$$4M\text{—}S\overset{\overset{S}{\|}}{C}S\text{—}R' + SnX_4 \longrightarrow Sn(SR')_4 + 4MX + 4CS_2 \quad (2)$$

Dans les composés de l'étain utilisés, R peut être notamment un alkyle, tel que par exemple méthyle, éthyle, n-propyle, iso-propyle, n-butyle, iso-butyle, sec-butyle, t.butyle, hexyle, octyle, lauryle, stéaryle, etc. ; R peut être également un groupe substitué comme bétacarboalkoxy-éthyle, oxo-2-butyle, oxo-3-pentyle, éthoxy-2-éthyle, etc., c'est-à-dire un oxo-alkyle ou carbo-alkoxy-éthyle.

L'anion X peut être tout anion non oxydant, minéral ou organique, et, de préférence halogène ; pour des raisons tant chimiques qu'économiques, l'anion $Cl^-$ est très indiqué.

En ce qui concerne R' du thioxanthate, il peut être constitué par un alkyle, un cycloalkyle, un alkényle, un aralkyle, un carboalcoxyalkyle, oxo-alkyle, alkényl-carboxylate d'alkyle ou d'aryle ; les alkyles et alkényles peuvent être plus particulièrement en $C_1$ à $C_{18}$, et les aryles en $C_6$ à $C_{12}$, R' peut, très utilement, être constitué par un reste d'ester, à savoir un alkylène-carboxylate d'alkyle ou d'aryle, c'est-à-dire un groupement du type $—(CH_2)_mCOOR''$ qui, avec l'atome de soufre, forme le groupe (SR') constituant un mercapto-ester. De préférence m est 1 à 4 et R'' est en $C_1$ à $C_{18}$. Ainsi, par exemple R' peut être du méthylène-carboxylate d'hexyle, de l'éthylène-carboxylate de lauryle, acétate d'éthyl hexyle (c'est-à-dire méthylène carboxylate) ou d'isooctyle.

Pour illustrer la réaction (1), écrite en termes généraux plus haut, on peut envisager, par exemple, la préparation de diéthyl-étain-mercapto-propionate de n-hexyle à partir du thioxanthate de sodium dont le groupe R' est de l'éthylène carboxylate d'hexyle :

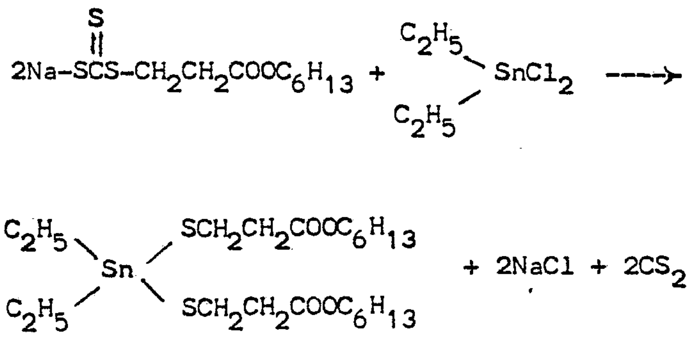

(3)

On peut de même obtenir un étain mono-mercaptide, en utilisant une seule mole de thioxanthate.

La réaction suivant l'invention peut être réalisée entre 0° et 100 °C, mais de préférence entre 10° et 70 °C.

Comme déjà indiqué plus haut, l'avantage considérable de ce nouveau procédé réside en ce qu'on n'a pas besoin d'utiliser un mercaptan, le groupe organique voulu, —SR', étant apporté par le thioxanthate, Or, ce dernier peut être obtenu industriellement, de façon aisée et économique, par la réaction connue en soi d'un tri-thiocarbonate sur un halogénure organique. On peut en effet produire un tri-thiocarbonate de méthal ou d'ammonium par l'action d'un sulfure correspondant sur du disulfure de carbone, suivant la réaction :

$$CS_2 + M_2S \longrightarrow CS_3M_2 \qquad (4)$$

où M désigne un cation, généralement Na, K ou $NH_4$. Cette opération est effectuée de préférence dans l'eau, la vitesse de la réaction pouvant être accélérée par l'adjonction d'un catalyseur de transfert de phase, comme par exemple le chlorure de tri-isooctyl-méthyl-ammonium ; on peut également travailler dans des mélanges de solvants, tels que eau-alcool, eau-dioxane ou similaires.

Le passage du trithiocarbonate à un thioxanthate est également facile et économique : il a lieu lorsqu'on fait réagir le trithio-carbonate avec un composé halogéné R'X, dans lequel R' peut être tout radical organique, en particulier du type de ceux qui ont été indiqués plus haut à titre d'exemple. X est un halogène, surtout Cl, Br ou I, le chlore étant naturellement le plus pratique. Voici l'illustration de cette réaction :

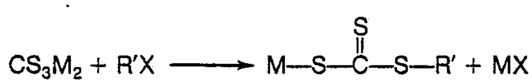

(5)

Cette réaction s'accomplit bien dans un milieu renfermant de l'eau, par exemple dans un mélange eau-alcool, eau-dioxane, ou similaire.

Ainsi, le thioxanthate, obtenu dans la réaction (5) peut être avantageusement employé pour la réalisation des réactions (1) à (3), indiquées plus haut.

Bien que la préparation du thioxanthate, à partir du sulfure de carbone et d'un sulfure métallique (réaction 4), suivie de la transformation d'un trithio-carbonate en thioxanthate selon réaction (5), soit particulièrement favorable pour la réalisation de l'invention, celle-ci n'est cependant pas liée au mode de préparation du thioxanthate : le nouveau procédé reste valable quelle que soit la voie qui a conduit à l'obtention du thioxanthate.

Dans une variante très avantageuse du procédé de l'invention, le thioxanthate est produit *in situ* à partir d'un trithio-carbonate. Cela veut dire qu'au lieu de préparer d'avance le thioxanthate, on fait réagir directement un trithio-carbonate avec un halogénure organique et ensuite avec un sel de l'étain. La réaction (6) ci-après illustre cette variante dans le cas d'un dihalogénure de dialkyl-étain ($R_2SnX_2$).

$$2CS_3M_2 + 2XR' + R_2SnX_2 \xrightarrow{\text{eau/alcool}} R_2Sn(SR')_2 + 4MX + 4CS_2 \qquad (6)$$

Cette opération s'effectue bien dans un solvant polaire, notamment dans un alcool tel que méthanol, renfermant de l'eau.

Comme le montrent les réactions indiquées dans ce qui précède, le sulfure de carbone, qui a servi à la formation du tri-thiocarbonate de départ, est libéré pendant la réaction finale, donnant l'organo-étain cherché : le $CS_2$ peut donc être récupéré pour être réutilisé à une nouvelle préparation de trithiocarbonate, ce qui contribue grandement à rendre économique le procédé de l'invention.

Dans une des variantes du nouveau procédé, le sulfure de carbone peut être récupéré avant même la réaction avec le sel d'étain. Pour cela, le thioxanthate est traité par un acide non oxydant, de préférence HCl, ce qui a pour effet la libération de $CS_2$ que l'on sépare ; au milieu restant, on ajoute le sel d'étain voulu et l'on obtient le même dérivé stannique que dans le membre droit de l'équation (1).

Des essais de stabilisation du chlorure de polyvinyle, effectués avec des organo-stanniques préparés suivant l'invention, il résulte que ces corps sont aussi efficaces que les composés correspondants de la technique connue.

Pour avoir des produits suffisamment purs, et éviter la légère coloration jaune que peut donner la présence d'une petite quantité de trithio-carbonate organique symétrique, il suffit d'un rapide traitement sous vide du thioxanthate utilisé. Ce traitement consiste notamment à maintenir le thioxanthate sous un vide d'environ 1 torr pendant 30 à 60 minutes, à la température ordinaire, entre 25 et 30 °C.

Les exemples non limitatifs qui suivent illustrent l'invention.

## Exemple 1

Préparation de l'iso.octyloxy-carbonyl-méthyl-thioxanthate de sodium

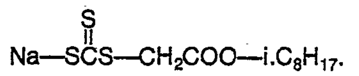

Dans un réacteur en verre à double enveloppe, équipé d'un système d'agitation, d'un thermomètre, d'une ampoule à brome équilibrée et d'un réfrigérant surmonté d'un bulle à bulle, on place 108,2 g d'une solution à 35,26 % de trithiocarbonate de sodium (0,25 mole), 50 ml de méthanol et 25,3 g d'eau. On ajoute ensuite, goutte-à-goutte, 51,5 g de chloroacétate d'isooctyle (0,25 mole), dilué dans 25 ml de méthanol, en maintenant la température du mélange réactionnel entre 15° et 20 °C. Après la fin de l'addition, on laisse agiter une heure à la même température. On obtient un mélange biphasique.

## Exemple 2

Préparation de l'(éthyl-2-hexyloxy-carbonyl)méthyl thioxanthate de sodium

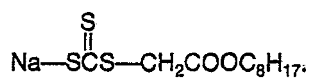

Le mode opératoire est exactement le même que pour l'exemple 1. On remplace le chloracétate d'isooctyle par du chloracétate d'éthyl-2-hexyle.

## Exemple 3

Préparation de dibutylétain bis(mercaptoacétate d'éthyl-2-hexyle)

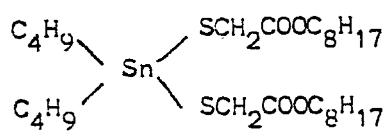

Dans du thioxanthate, préparé dans l'exemple 2, on ajoute goutte-à-goutte, dans le même réacteur, un léger excès d'acide chlorhydrique 12 N (d = 1,19), en maintenant la température entre 20° et 25 °C. On contrôle le pH de la solution à l'aide d'un pH-mètre. Le pH initial est de 10,6 et on cesse l'addition lorsque le pH atteint une valeur de l'ordre de 5 à 6. Le $CS_2$ mis en liberté est séparé, tandis que la phase organique est extraite à l'éther, puis séchée sur chlorure de calcium. Le solvant et le reste de sulfure de carbone sont évaporés. On obtient un produit jaune ($R^t$ : 95 %) essentiellement constitué de thioglycolate d'éthyl-hexyle.

Dans un ballon de 500 ml, équipé d'un agitateur magnétique et d'un thermomètre, on place 8,3 g (0,142 mole) d'une solution d'ammoniaque à 29,1 %, 14 g (0,77 mole) d'eau et 20 g (0,066 mole) de dibutyldichloroétain. On ajoute ensuite goutte-à-goutte 27,8 g (0,133 mole) de thioglycolate d'éthyl-hexyle précédemment obtenu à 45-50 °C. Après la fin de l'addition, on porte le mélange réactionnel à 60-65 °C pendant une heure. On extrait la phase organique à l'éther et on sèche sur chlorure de calcium. On obtient 40,3 g d'un produit jaune.

Exemple 4

Préparation de dibutylétain bis(mercaptoacétate d'isooctyle)

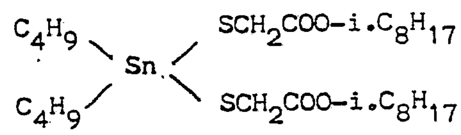

A la solution de thioxanthate, préparée dans l'exemple 1, on ajoute, dans le même réacteur, entre 14° et 18 °C, 38 g (0,125 mole) de $Bu_2SnCl_2$.

La couleur passe du rouge-orangé au jaune.

Le méthanol et le sulfure de carbone sont éliminés sous vide, puis la solution est extraite à l'éther. La phase organique est lavée deux fois par 50 ml d'eau, puis séchée sur sulfate de sodium. Finalement, le solvant est évaporé sous vide ; on obtient 73,6 g de liquide jaune.

Exemple 5

Préparation de dibutylétain bis(mercaptoacétate d'éthyl-2-hexyle)

Le mode opératoire est identique à celui de l'exemple 4, le thioxanthate de départ ayant été préparé selon l'exemple 2. On obtient 76,4 g de liquide jaune.

Exemple 6

Préparation de dibutylétain bis(mercaptoacétate d'isooctyle)

Le mode opératoire est identique à celui de l'exemple 4, sauf pour la température de réaction qui est maintenue à 45 °C, pendant 3 heures.

On obtient 78,5 g de liquide jaune.

Exemple 7

Préparation de dibutylétain bis(mercaptoacétate d'éthyl-2-hexyle)

Le mode opératoire est identique à celui de l'exemple 5, sauf pour la température de réaction qui est maintenue à 45 °C pendant 3 heures.

On obtient 79,7 g de liquide jaune.

Les produits obtenus dans les exemples 4, 5, 6 et 7 ont été essayés en tant que stabilisant du PVC en comparaison avec du dibutylétain bis(mercaptoacétate d'éthyl-2-hexyle) pur.

Ces essais comparatifs de stabilisation du chlorure de polyvinyle ont été effectués par calandrage sur malaxeur, à 185 °C, sur une résine de coefficient de viscosité K = 56. La concentration en stabilisant était de 0,3 parties en poids pour 100 parties de résine. Voici les résultats obtenus.

| Stabilisant | Apparition de la couleur (minutes) | |
|---|---|---|
| | Jaune clair | Brun foncé |
| $Bu_2Sn(SCH_2CO_2i.octyle)_2$ pur (référence) | 2 | 12 |
| Produit de l'exemple 4 | 1-2 | 12 |
| Produit de l'exemple 5 | 1-2 | 12 |
| Produit de l'exemple 6 | 1-2 | 12 |
| Produit de l'exemple 7 | 2 | 12 |

On voit que les organoétains obtenus par le procédé de l'invention stabilisent le chlorure de polyvinyle de la même manière que le fait le stabilisant classique.

Exemple 8

Préparation du dibutylétain bis(mercaptoacétate d'éthyl-2-hexyle) par la variante dans laquelle le thioxanthate est produit *in situ.*

Dans un réacteur en verre, à double enveloppe, équipé d'un système d'agitation, d'un thermomètre à

thermocouple, d'une ampoule à brome équilibrée, et d'un réfrigérant surmonté d'un bulle à bulle, on place 110,1 g d'une solution aqueuse à 35,04 % de trithiocarbonate de sodium (0,25 mole) et 50 ml de méthanol. On ajoute ensuite goutte-à-goutte 51,5 g de chloroacétate d'isooctyle (0,25 mole) dilué dans 25 ml de méthanol, en maintenant la température du mélange réactionnel entre 15° et 20 °C. Après la fin de l'addition, on laisse agiter une heure, à la même température. On obtient une phase orangée et un dépôt de sel. On élimine en tirant sous vide à 25 °C environ 40 % du poids de la solution. On ajoute ensuite 41,8 g (0,137 mole) de $Bu_2SnCl_2$ et la coloration jaune disparaît. Après filtration du sel formé, on extrait avec 50 ml d'éther, on lave à l'eau et on sèche sur sulfate de sodium. L'évaporation du solvant laisse 63,2 g d'un liquide incolore.

Le produit obtenu donne, à la stabilisation du chlorure de polyvinyle, pratiquement les mêmes résultats que le dibutylétain bis(mercapto acétate d'éthyl-2-hexyle) pur. D'autre part, au plastographe (200 °C, v = 50 rpm) le produit obtenu dans l'exemple 8 se montre strictement identique au produit commercial, du point de vue du contrôle de la viscosité.

## Revendications

1. Procédé pour la préparation d'un composé organostannique renfermant du soufre dans sa molécule, à partir d'un sel $R_nSnX_{(4-n)}$ où R est un groupe organique, X un anion non oxydant et n un nombre de 0 à 3, caractérisé en ce que l'on fait réagir ce sel avec un thioxanthate

$$M{-}S\overset{\overset{S}{\|}}{C}S{-}R'$$

dans lequel M désigne un métal ou l'ammonium, et R' le radical organique que l'on veut fixer à l'étain sous la forme de —SR', la réaction étant réalisée dans un solvant contenant de l'eau.

2. Procédé suivant la revendication 1, caractérisé en ce que M est un cation alcalin.

3. Procédé suivant la revendication 1 ou 2, caractérisé en ce que R' est un alkyle, cyclo-alkyle, alkényle, aralkyle, aryle, carbo-alkoxy-alkyle, oxo-alkyle, alkylène-carboxylate d'alkyle ou d'aryle, les alkyles et alkényles étant en $C_1$ à $C_{18}$ et les aryles en $C_6$ à $C_{12}$.

4. Procédé suivant l'une des revendications 1 à 3, caractérisé en ce que R est un alkyle en $C_1$ à $C_{18}$ ou un oxo- ou carbo-alkoxy alkyle, X étant un halogène, de préférence Cl.

5. Procédé suivant l'une des revendications 1 à 4, caractérisé en ce que le thioxanthate est formé *in situ,* au sein du solvant renfermant de l'eau, à partir de trithio-carbonate de Na, K ou $NH_4$, additionné d'un halogénure organique de radical R'.

6. Procédé suivant l'une des revendications 1 à 5, caractérisé en ce que le solvant, renfermant de l'eau, est un alcool ou le dioxane.

7. Procédé suivant l'une des revendications 1 à 4 ou 6, caractérisé en ce qu'avant la réaction avec le sel d'étain, le thioxanthate est soumis à un traitement sous vide, de préférence entre 25° et 30 °C sous environ 133,3 Pa de vide, pendant 30 à 60 minutes.

## Claims

1. Process for the preparation of organostannic compounds, containing sulfur in their molecule, starting from a salt $R_nSnX_{(4-n)}$ where R is an organic group, X a non oxidizing anion and n a number of 0 to 3, characterized in that this salt is reacted with a thioxanthate

$$M{-}S\overset{\overset{S}{\|}}{C}S{-}R'$$

wherein M designates a metal or ammonium, and R' the organic radical which has to be fixed to tin in the form of —SR', the reaction being carried out in a water containing solvent.

2. Process according to claim 1, characterized in that M is alkali metal.

3. Process according to claim 1 or 2, characterized in that R' is an alkyl, cycloalkyl, alkenyl, aralkyl, aryl, carbo-alkoxy-alkyl, oxo-alkyl, alkylene-carboxylate of alkyl or of aryl, the alkyls and alkenyls being $C_1$ to $C_{18}$ and the aryls $C_6$ to $C_{12}$.

4. Process according to one of claims 1 to 3, characterized in that R is $C_1$ to $C_{18}$ alkyl or an oxo- or carbo-alkoxy alkyl, X being halogen, preferably Cl.

5. Process according to one of claims 1 to 4, characterized in that the thioxanthate is formed *in situ,* in the water containing solvent, from Na, K or $NH_4$ trithio-carbonate, added with an organique halide of the radical R'.

6. Process according to one of claims 1 by 5, characterized in that the solvent, which contains water, is an alcohol or dioxane.

7. Process according to one of claims 1 to 4 or 6, characterized in that before the reaction with the tin salt, the thioxanthate is subjected to a vacuum treatment, preferably between 25° and 30 °C under about a vacuum of 133,3 Pa, during 30 to 60 minutes.

**Ansprüche**

1. Verfahren zur Herstellung einer Organozinn-IV-Verbindung, die Schwefel in ihrem Molekül enthält, ausgehend von einem Salz $R_nSnX_{(4-n)}$, worin R eine organische Gruppe, X ein nicht oxidierendes Anion und n eine Zahl von 0 bis 3 ist, dadurch gekennzeichnet, daß man dieses Salz mit einem Thioxanthat

$$M{-}S\overset{\overset{S}{\|}}{C}S{-}R'$$

worin M ein Metall oder Ammonium und R' den organischen Rest, den man an das Zinn in der Form von —SR' binden will, darstellt, wobei die Reaktion in einem Wasser enthaltenden Lösungsmittel durchgeführt wird.

2. Verfahren nach Anspruch 1, dadurch gekennzeichnet, daß N ein Alkalikation ist.

3. Verfahren nach Anspruch 1 oder 2, dadurch gekennzeichnet, daß R ein Alkyl, Cycloalkyl, Alkenyl, Aralkyl, Aryl, Carbo-alkoxyalkyl, Oxoalkyl, Alkyl- oder Aryl- alkylencarboxylat ist, worin die Alkyle und Alkenyle $C_1$-$C_{18}$ und die Aryle $C_6$-$C_{12}$ aufweisen.

4. Verfahren nach einem der Ansprüche 1-3, dadurch gekennzeichnet, daß R ein Alkyl mit $C_1$-$C_{18}$ oder ein Oxo- oder Carbo-alkoxyalkyl und X ein Halogen, vorzugsweise Cl ist.

5. Verfahren nach einem der Ansprüche 1-4, dadurch gekennzeichnet, daß das Thioxanthat *in situ* in einem Wasser enthaltenden Lösungsmittel, ausgehend von Na-, K- oder $NH_4$-Trithiocarbonat, versetzt mit einem organischen Halogenid von dem Rest R' gebildet wird.

6. Verfahren nach einem der Ansprüche 1-5, dadurch gekennzeichnet, daß das Wasser enthaltende Lösungsmittel ein Alkohol oder Dioxan ist.

7. Verfahren nach einem der Ansprüche 1-4 oder 6, dadurch gekennzeichnet, daß das Thioxanthat vor der Reaktion mit dem Zinnsalz einer Behandlung im Vakuum, vorzugsweise zwischen 25° und 30 °C unter etwa 133,3 Pa Vakuum während 30-60 Minuten unterzogen wird.